# EUROPÄISCHE PATENTSCHRIFT

(11) **EP 1 983 539 B1**
(45) Veröffentlichungstag und Bekanntmachung des Hinweises auf die Patenterteilung: **29.02.2012**
(21) Anmeldenummer: 08006859.6
(22) Anmeldetag: 04.04.2008
(51) Int. Cl.: H01H 37/32, B29C 57/10

(54) **Temperaturbegrenzer und Verfahren zu seiner Herstellung**
Temperature limiter and method for its manufacture
Limiteur de température et procédé pour le fabriquer

(30) Priorität: 16.04.2007 DE 102007018206
(43) Veröffentlichungstag der Anmeldung: 22.10.2008
(73) Patentinhaber: TMC Sensortechnik GmbH, 75015 BRETTEN-Gölshausen (DE)
(72) Erfinder: Radbruch, Jens, 75245 Neulingen (DE)
(74) Vertreter: Mommer, Niels

(56) Entgegenhaltungen:
- EP-A2- 0 771 048
- DE-C2- 19 705 153
- DE-U- 7 025 123

## Beschreibung

Die Erfindung betrifft einen Temperaturbegrenzer, insbesondere einen Thermoschalter mit den im Oberbegriff des Anspruchs 1 angegebenen Merkmalen. Ein solcher Thermoschalter ist aus der DE 197 05 153 C2 bekannt.

Der bekannte Thermoschalter hat einen Körper, der von einem metallischen Gehäuse gebildet wird. Das Gehäuse hat eine Oberseite, eine Unterseite, zwei Schmalseiten und eine Vorderseite. Rückseitig ist das Gehäuse durch einen Isolator verschlossen, welcher in dem Gehäuse steckt. Zwei elektrische Leitungen führen durch diesen Isolator aus dem Gehäuseinneren nach außen. Sie dienen zum elektrischen Anschließen des Thermoschalters. Auf dem Gehäuse ist eine elektrisch isolierende Hülle aus einer schrumpfbaren Kunststofffolie vorgesehen. Zur Bildung der Hülle geht man von einem Schlauchabschnitt aus, welcher an seinem einen Ende durch Falten und Schweißen verschlossen wird. Bei den bekannten Thermoschaltern wird die Hülle an ihrem einen Ende von einander gegenüberliegenden Seiten her einwärts gefaltet, platt gedrückt und verschweißt. Das auf diese Weise verschlossene Ende der Hülle verjüngt sich zu ihrer Spitze hin. Die Hülle wird auf das Gehäuse des Thermoschalters geschoben und aufgeschrumpft. Sie ist so lang, dass sie das Gehäuse auf voller Länge und noch einen kleinen Teil der aus dem Gehäuse herausführenden elektrischen Leitungen überdeckt.

Temperaturbegrenzer können auch als PTC-Widerstände ausgebildet sein, die ähnlich wie Thermoschalter in einer elektrisch isolierenden Hülle eingepackt sind. Dabei kann der PTC-Widerstand in einem von der Hülle umgebenen Gehäuse angeordnet sein oder die Hülle unmittelbar an dem Widerstand anliegen.

Die bekannten Temperaturbegrenzer, insbesondere Thermoschalter, werden häufig in elektrischen Wicklungen, insbesondere in Motorwicklungen, eingesetzt, um die darin auftretende Wärmeentwicklung zu überwachen. PTC-Widerstände und Thermoschalter werden auch zur Strombegrenzung eingesetzt. Dabei bewirkt Stromfluss eine Erwärmung des Thermoschalters, die bei Überschreiten einer kritischen Schwelle zu einem Ansprechen des Schalters führt. Im Zuge der fortschreitenden Miniaturisierung von elektrischen Baugruppen besteht ein Bedarf an Temperaturbegrenzern, die ebenfalls miniaturisiert sind.

Der vorliegenden Erfindung liegt Aufgabe zugrunde, Temperaturbegrenzer, insbesondere Thermoschalter, der vorstehend genannten Art zu verkleinern. Nach Möglichkeit sollen sie durch die Verkleinerung nicht verteuert werden.

Diese Aufgabe wird gelöst durch einen Temperaturbegrenzer mit den im Patentanspruch 1 angegebenen Merkmalen. Der unabhängige Anspruch 12 gibt ein vorteilhaftes Verfahren zum Herstellen einer Hülle und zum Aufbringen der Hülle auf einen Temperaturbegrenzer an, welches zu einem verkürzten Temperaturbegrenzer führt. Vorteilhafte Weiterbildungen der Erfindung sind Gegenstand der Unteransprüche.

Die Erfindung erreicht eine Verkleinerung des Temperaturbegrenzers durch eine Verkürzung von dessen elektrisch isolierender Hülle an ihrem vorderen, geschlossenen Ende. Das hat wesentliche Vorteile:
- Die Verkürzung des Temperaturbegrenzers wird erreicht, ohne dass der Körper oder ein den Körper bildendes Gehäuse verkürzt werden muss. Insbesondere kann trotz der Verkürzung eine elektrische Kriechstrecke entsprechend einer geforderten lsolationsklasse, beispielsweise von 2 mm Länge, ausgebildet werden.
- Da der Körper des Thermoschalters unverändert beibehalten werden kann, kann auch das in ihm enthaltene Schaltwerk beibehalten werden.
- Da das Gehäuse und das vom Gehäuse aufgenommene Schaltwerk beibehalten werden können, erübrigt sich deren Neuentwicklung und es werden Entwicklungskosten eingespart.
- Die Verkürzung des Thermoschalters geht nicht mit einer Verkleinerung des Schaltwerks einher und hat deshalb auch keine Vergrößerung der Schalttoleranzen zur Folge.
- Da das Schaltwerk nicht verkleinert werden muss, bleiben dessen Eigenschaften unverändert, insbesondere nimmt die Stromtragfähigkeit des Thermoschalters nicht ab.

Die Verkürzung der Hülle wird dadurch erreicht, dass die Hülle von den Schmalseiten her, von der Oberseite her und von der Unterseite her so gegen die Vorderseite gefaltet ist, dass diese lückenlos bedeckt ist. Dabei sind die von der Oberseite und von der Unterseite her gegen die Vorderseite gefalteten Abschnitte der Hülle bevorzugt höchstens so lang wie die Höhe der Schmalseiten, wohingegen die von den Schmalseiten her gegen die Vorderseite gefalteten Abschnitte der Hülle bevorzugt länger sind als die Höhe der Schmalseiten. Unter der Höhe der Schmalseiten wird dabei der Abstand zwischen Oberseite und Unterseite verstanden. Eine auf diese Weise am vorderen Ende verschlossene Hülle des Temperaturbegrenzers hat wesentliche weitere Vorteile:
- Die Hülle kann durch einfache Faltvorgänge, nämlich zunächst von den beiden einander gegenüberliegenden Schmalseiten her und danach von der Oberseite her und von der Unterseite her, gefolgt von einem Schweißvorgang, insbesondere von einem Ultraschallschweißvorgang, geschlossen werden. Als Alternative zu einem Schweißvorgang kann das Ende des die Hülle bildenden Schlauchabschnitts auch durch Kleben stoffschlüssig verschlossen werden.
- Die gefalteten Abschnitte liegen der Vorderseite des Körpers dichtest möglich an.
- Durch die gewählte Art der Faltung ist auch bei flachen Gehäusen eine gegenseitige Überdeckung der gefalteten Abschnitte der Hülle in einem solchen Ausmaß möglich, dass am vorderen Ende der Hülle eine ausreichende Isolationsfestigkeit gewährleistet ist.
- Scharfe Kanten und spitze Ecken, die beim Einschieben eines erfindungsgemäßen Temperaturbegrenzers in eine Wicklung deren empfindliche Drähte oder deren Isolation schädigen könnten, werden vollständig vermieden.
- Verglichen mit einem Temperaturbegrenzer aus dem Stand der Technik mit einer typischen Länge von 15 mm bis 20 mm können durch die erfindungsgemäße Ausbildung immerhin 10 % bis 15 % der Länge des Schalters eingespart werden, ohne dass das eine signifikante Verteuerung des Schalters zur Folge hätte.

Vorzugsweise ist zwischen den von den Schmalseiten zur Vorderseite gefalteten Abschnitten und den von der Ober- oder Unterseite zur Vorderseite gefalteten Abschnitten jeweils eine Faltkante ausgebildet, die schräg zu einer Faltlinie verläuft, um welche die von der Ober- oder Unterseite zur Vorderseite gefalteten Abschnitten gefaltet sind. Besonders bevorzugt ist dabei, dass die Faltkante über die Faltlinie hinaus von der Stirnfläche weg verläuft.

Vorzugsweise sind bei dem erfindungsgemäßen Temperaturbegrenzer die von den Schmalseiten her gegen die Vorderseite gefalteten Abschnitte um Faltlinien gefaltet, die gegenüber Faltlinien, um welche die von der Oberseite und der Unterseite her gegen die Vorderseite gefalteten Abschnitte gefaltet sind, von der Vorderseite weg zurückverlegt sind. Das ist eine besonders wirkungsvolle Maßnahme, um bei einem Körper, dessen Breite deutlich größer ist als seine Höhe, an der Vorderseite auch dann eine hinreichende Überdeckung der gefalteten Abschnitte der Hülle und damit eine hinreichende elektrische Isolation zu erreichen, wenn die von der Oberseite und von der Unterseite her gefalteten Abschnitte der Hülle nicht länger sind wie die Höhe der Schmalseiten und wenn die Hülle, was am einfachsten ist, aus einem stumpf und rechtwinklig zu seiner Längsachse abgeschnittenen Schlauchabschnitt gebildet ist. Erleichtert wird eine solche Ausführungsform des Temperaturbegrenzers, wenn der Übergang von der Vorderseite zu seinen Schmalseiten abgeschrägt oder gerundet ist.

Das erfindungsgemäße Verfahren zum Herstellen einer an einem Ende geschlossenen Hülle aus einem schrumpfbaren Kunststoff und zum Aufbringen der Hülle auf einen Temperaturbegrenzer, insbesondereThermoschalter, ist gekennzeichnet durch die nachfolgenden Verfahrensschritte:
(a) Abschneiden eines Schlauchabschnitts von einem Schlauch,
(b) Anordnen des Schlauchabschnitts auf einem Dorn, der eine Vorderseite und daran anschließend eine Oberseite und eine Unterseite sowie zwei Schmalseiten aufweist, so dass ein Abschnitt des Schlauchabschnitts über die Vorderseite vorsteht,
(c) Einwärtsfalten des über die Vorderseite des Dorns vorstehenden Abschnittes des Schlauchabschnittes und Verschließen des Schlauchabschnittes durch stoffschlüssiges Verbinden des über die Vorderseite des Dorns vorstehenden, einwärts gefalteten Abschnittes des Schlauchabschnittes mit sich selbst, und
(d) Aufschieben der Hülle auf den Temperaturbegrenzer,
wobei im Schritt (c) der über die Vorderseite des Dorns überstehende Abschnitt des Schlauchabschnitts sowohl von den Schmalseiten her als auch von der Oberseite und von der Unterseite her gegen die Vorderseite des Dorns gefaltet wird, so dass diese lückenlos bedeckt wird.

Bevorzugt wird im Schritt (c) der über die Vorderseite des Dorns überstehende Abschnitt des Schlauchabschnitts zuerst von den Schmalseiten her und dann von der Oberseite und von der Unterseite her gegen die Vorderseite des Dorns gefaltet wird, so dass diese lückenlos bedeckt wird. Bevorzugt wird der Schlauchabschnitt um eine Länge von der Oberseite und von der Unterseite her gegen die Vorderseite des Dorns gefaltet wird, welche nicht größer ist als die Höhe der Schmalseite.

Das stoffschlüssige Verbinden des einwärts gefalteten Abschnitts kann prinzipiell nach jedem Faltungsschritt erfolgen. Einfacher ist es jedoch, erst nachdem sowohl von den Schmalseiten als auch von der Oberseite und von der Unterseite her gefaltet wurde, stoffschlüssig zu verbinden, beispielsweise zu verschweißen. Besonders gut geeignet ist Ultraschallschweißen.

Das Falten und Verschließen der Vorderseite der Hülle geschieht im erfindungsgemäßen Verfahren nicht unmittelbar auf dem Körper des Temperaturbegrenzers, sondern auf einem Dorn, dessen Stirnfläche der Kontur des Körpers des Temperaturbegrenzers nachgebildet ist. Auf diese Weise lassen sich die Hüllen besonders rationell und ohne Belastung des Gehäuses des Thermoschalters und seines Schaltwerks fertigen. Eine Belastung könnte sich andernfalls insbesondere durch das Verschweißen der über die Vorderseite des Dorns vorstehenden, einwärts gefalteten Abschnitte des Schlauchabschnittes miteinander ergeben.

Der Dorn muss in seiner Gestalt nicht exakt mit der Gestalt des Körpers des Temperaturbegrenzers übereinstimmen. So lässt sich die Hülle auf einem Dorn mit einer stumpfen, rechteckigen Vorderseite, die einer gerundeten Kontur des Gehäuses des Temperaturbegrenzers nur angenähert ist, leichter falten und verschweißen, wobei es auch in diesem Fall günstig und deshalb bevorzugt ist, einen Dorn zu verwenden, welcher zwischen seiner stumpfen Vorderseite und seinen beiden Schmalseiten jeweils eine Schrägfläche oder eine gerundete Fläche aufweist, die es erleichtert, die von den Schmalseiten ausgehenden Abschnitte der Hülle um eine von der stumpfen Vorderseite des Dorns zurückverlegte Faltkante einwärts zu falten und dadurch eine bessere Überdeckung der einwärtsgefalteten Abschnitte der Hülle zu erhalten. Das gilt auch dann, wenn der Schlauchabschnitt, aus welchem die Hülle gebildet wird, stumpf und rechtwinklig zu seiner Längsachse vom Schlauch abgeschnitten wurde.

Eine andere Möglichkeit, auch bei flachen Gehäusen eine ausreichende Überdeckung der einwärts gefalteten Abschnitte des Schlauchabschnittes zu erhalten, besteht darin, den Schlauchabschnitt an seinem einen Ende in der Weise abgestuft abzuschneiden, dass der Rand des Schlauchabschnittes an zwei einander diametral gegenüberliegenden Stellen auf einer Länge, welche mit der Höhe der Schmalseiten übereinstimmt, über den restlichen Rand des Schlauchabschnittes übersteht.

Bevorzugt wird die Hülle nach dem Aufschieben auf den Temperaturbegrenzer geschrumpft.

Der Schlauchabschnitt kann stumpf und rechtwinklig zu seiner Längsachse vom Schlauch abgeschnitten werden, was den Vorteil hat, besonders einfach zu sein. Eine andere Möglichkeit ist, dass der Schlauchabschnitt an seinem einen Ende in der Weise abgestuft abgeschnitten wird, dass der Rand des Schlauchabschnittes an zwei einander diametral gegenüberliegenden Stellen auf einer Länge, welche mit der Höhe der Schmalseiten übereinstimmt, über den restlichen Rand des Schlauchabschnittes übersteht. Diese Maßnahme hat den Vorteil, die Faltung zu vereinfachen.

Ausführungsbeispiele der Erfindung sind in den beigefügten Zeichnungen schematisch dargestellt. In den verschiedenen Ausführungsbeispielen sind gleiche oder einander entsprechende Teile mit übereinstimmenden Bezugszahlen bezeichnet. Es zeigen:
- Figur 1: einen Schlauchabschnitt, der auf den Körper eines Thermoschalters geschoben ist;
- Figur 2: den in Figur 1 gezeigten Schlauchabschnitt nach Einwärtsfalten von den Schmalseiten her;
- Figur 3: den Schlauchabschnitt beim Einwärtsfalten von der Oberseite und von der Unterseite her;
- Figur 4: ein Ausführungsbeispiel eines Thermoschalters mit einer gemäß den Figuren 1 bis 3 verschlossenen Hülle;
- Figur 5: das in Figur gezeigte Ausführungsbeispiel in einem Längsschnitt; und
- Figur 6: ein weiteres Ausführungsbeispiel einer gefalteten Hülle.

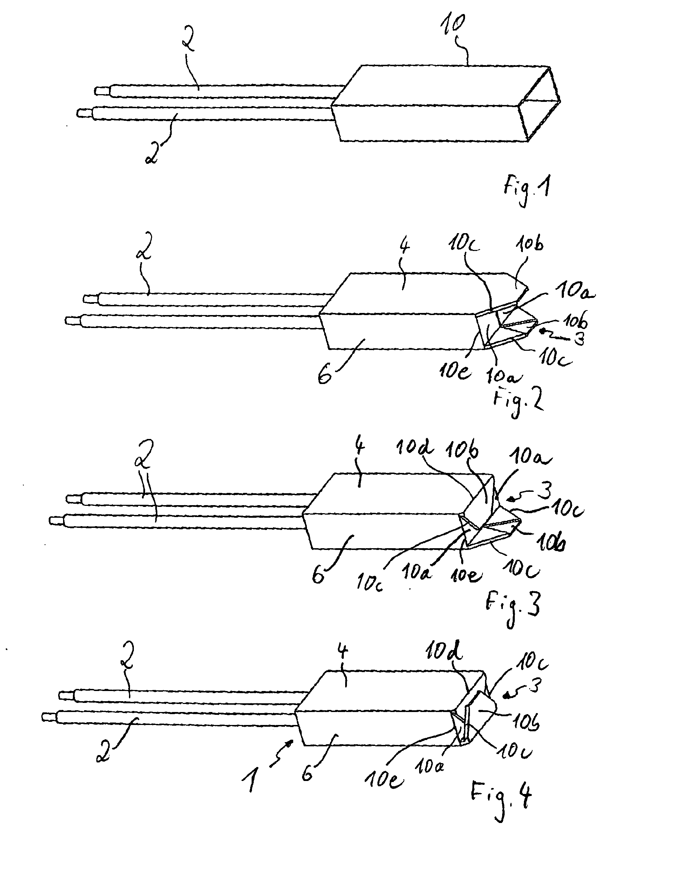

Anhand der Figuren 1 bis 3 wird im Folgenden erläutert, wie der Körper eines in Figur 4 dargestellten Thermoschalters 1 mit einer elektrisch isolierenden Hülle 10 versehen werden kann. Der Körper des Thermoschalters 1 ist bei den dargestellten Ausführungsbeispielen ein längliches metallisches Gehäuse, das über den größten Teil seiner Länge einen gleich bleibenden Querschnitt hat und ein Schaltwerk enthält. Anstelle eines länglichen Gehäuses kann beispielsweise auch ein Gehäuse, das die Form eines flachen Zylinders oder eines Rhombus hat, auf die im Folgenden erläuterte Weise mit einer elektrisch isolierenden Hülle 10 versehen werden. Die Mantelfläche eines zylindrischen Gehäuses bildet in einem solchen Fall die Vorderseite, die von dem verschlossenen Ende des die Hülle bildenden Schlauchabschnitts 10 bedeckt wird. Aus der Rückseite des Schalters ragt mindestens eine, üblicherweise zwei elektrische Anschlussleitungen 2 heraus.

Das Gehäuse kann das Schaltwerk allseitig umschließen oder an mehreren Seiten Durchbrüche aufweisen und beispielsweise als offenes Gehäuse in Form eines Käfigs ausgebildet sein. Die Funktion des Gehäuses ist es, das in ihm enthaltene Schaltwerk vor Beschädigung durch Druckeinwirkung zu schützen.

Der in Figur 4 dargestellte Thermoschalter hat eine Vorderseite 3, an die eine Oberseite 4 und eine Unterseite sowie zwei Schmalseiten 6 anschließen. Bei dem dargestellten Ausführungsbeispiel schließen die Schmalseiten 6 über Faltkanten 10e an die Vorderseite 3 an. Dies ist jedoch nicht zwingend erforderlich, da der umschlossene Körper des Thermoschalters 1 beispielsweise auch gerundet, insbesondere auch kreisförmig gerundet sein kann, so dass die Schmalseiten 6 kontinuierlich in die Vorderseite 3 übergehen.

Die elektrisch isolierende Hülle ist aus einem Schlauchabschnitt 10 gebildet, der in einem ersten Arbeitsschritt gemäß Figur 1 auf den Körper des Thermoschalters 1 oder einen entsprechend geformten Dorn aufgeschoben wird. In einem zweiten Arbeitsschritt wird gemäß Figur 2 die Hülle 10 von den Schmalseiten 6 her gegen die Vorderseite 3 des Körpers, bzw. des Dorns gefaltet. Die von den Schmalseiten 6 her gegen die Vorderseite 3 gefalteten Abschnitte 10a der Hülle sind dabei länger als die Höhe der Schmalseiten 6. Beim Einwärtsfalten der Abschnitte 10a von den Schmalseiten 6 gegen die Vorderseite 3 wird ein Teil der an der Oberseite 4 und der Unterseite über die Vorderseite 3 vorstehenden Bereiche des Schlauchs 10 nach innen gefaltet, so dass die anschließend gemäß Figur 3 von der Oberseite 4 und von der Unterseite her gegen die Vorderseite 3 gefalteten Abschnitte 10b der Hülle schräg zueinander verlaufende Seitenränder 10c aufweisen, die von einer Faltkante gebildet sind.

Bei dem in den Figuren 1 bis 4 dargestellten Ausführungsbeispiel verläuft die Faltkante 10c bis zu einer Faltlinie 10d, um welche die von der Ober- oder Unterseite zur Vorderseite 3 gefalteten Abschnitten 10b jeweils gefaltet sind. Hat der Thermoschalter 1 aber einen Körper, der von den Schmalseiten 6 zu der Vorderseite 3 hin abgeschrägt oder gerundet ist, so verläuft die Faltkante 10c nicht nur bis zu der Faltlinie 10d, sondern darüber hinaus von der Stirnfläche 3 weg. Auf diese Weise kann insbesondere bei flachen Thermoschaltern 1 der Faltungsvorgang erleichtert werden. Bei einer derartigen Ausführungsform sind die von den Schmalseiten 6 her gegen die Vorderseite 3 gefalteten Abschnitte 10a um Faltlinien 10e gefaltet, die gegenüber Faltlinien 10d, um welche die von der Oberseite 4 und der Unterseite her gegen die Vorderseite 3 gefalteten Abschnitte 10b gefaltet sind, von der Vorderseite 3 weg zurückverlegt sind

Die von der Oberseite und von der Unterseite her gegen die Vorderseite 3 gefalteten Abschnitte 10b der Hülle sind dabei höchstens so lang wie die Höhe der Schmalseiten 6. Unter der Höhe der Schmalseiten 6 wird dabei der Abstand zwischen Oberseite 4 und Unterseite des Thermoschalters 1 verstanden.

In einem weiteren Arbeitsschritt wird der gemäß den Figuren 1 bis 3 an einem Ende gefaltete Schlauchabschnitt 10 stoffschlüssig verschlossen, bevorzugt durch Ultraschallschweißen. Eine auf einem Dorn gefaltete Hülle 10 kann anschließend auf einem Thermoschalter aufgeschoben werden. Die gemäß den Figuren 1 bis 3 gebildete Hülle 10 kann auf den Körper des Thermoschalters aufgeschrumpft werden. Möglich ist es auch, Zwischenräume zwischen dem Körper der Thermoschalters und der Hülle mittels einer Vergussmasse aufzufüllen. Der Schlauchabschnitt, der die elektrisch isolierende Hülle bildet, hat bevorzugt eine Stärke zwischen 50 µm und 250 µm. Der Schlauch kann extrudiert oder aus einer Kunststofffolie gewickelt sein, die zur Erhöhung der Temperaturfestigkeit mit einer Papierlage verstärkt ist. Geeignete Kunststofffolien können aus Aramitfasern und/oder Polyester hergestellt werden. Geeignet sind insbesondere unter den Marken Nomex und Mylar vertriebene Kunststoffe.

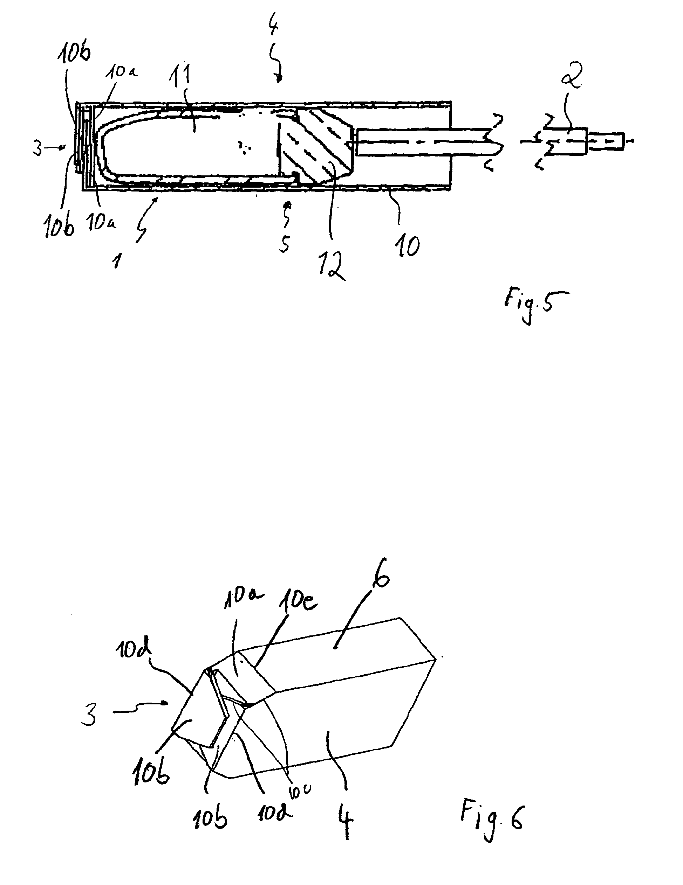

In Figur 5 ist der in Figur 4 gezeigte Thermoschalter 1 in einem Längsschnitt dargestellt. Die Hülle 10 umgibt den Körper 11, der als Gehäuse ein Schaltwerk enthält.

Das Gehäuse ist von einem Isolator 12 verschlossen, durch den Anschlussleitungen 2 hindurchgeführt sind, die rückwärtig aus dem Thermoschalter 1 herausragen. Zu sehen sind insbesondere die Vorderseite 3 der Hülle mit der zwischen den gefalteten Abschnitte 10a, 10b verlaufenden Kriechstrecke sowie Oberseite 4 und Unterseite 5 der Hülle 10.

In Figur 6 ist ein weiteres Ausführungsbeispiel einer gefalteten Hülle 10 eines Thermoschalters 1 dargestellt. Im Unterschied zu dem vorstehend beschriebenen Ausführungsbeispiel sind dabei die von den Schmalseiten 6 her gegen die Vorderseite (3) gefalteten Abschnitte 10a um Faltlinien 10e gefaltet sind, die gegenüber Faltlinien 10d, um welche die von der Oberseite 4 und der Unterseite her gegen die Vorderseite 3 gefalteten Abschnitte 10b gefaltet sind, von der Vorderseite 3 weg zurückverlegt.

Die Faltkante 10c, die zwischen den von den Schmalseiten 6 zur Vorderseite 3 gefalteten Abschnitten 10a und den von der Ober- oder Unterseite zur Vorderseite 3 gefalteten Abschnitten 10b ausgebildet ist und schräg zu der Faltlinie 10d verläuft, um welche die von der Ober- oder Unterseite zur Vorderseite 3 gefalteten Abschnitten 10b gefaltet sind, verläuft bei diesem Ausführungsbeispiel deshalb über die Faltlinie 10d hinaus von der Stirnfläche 3 weg.

## Patentansprüche

1. Temperaturbegrenzer, insbesondere Thermoschalter, mit einer Vorderseite (3), an die eine Oberseite (4) und eine Unterseite (5) sowie zwei Schmalseiten (6) anschließen, wobei der Temperaturbegrenzer (1) einen Körper (11) aufweist, der der von einer elektrisch isolierenden Hülle (10) umschlossen ist, die aus einem Schlauchabschnitt gebildet ist, der an einem Ende gefaltet und stoffschlüssig verschlossen ist, wobei das verschlossene Ende des Schlauchabschnitts eine Vorderseite (3) des Körpers (11) bedeckt,
**dadurch gekennzeichnet, dass** die Hülle (10) von den Schmalseiten (6) her mit Abschnitten (10a), von der Oberseite (4) her und von der Unterseite (5) her mit Abschnitten (10b) so gegen die Vorderseite (3) des Körpers (11) gefaltet ist, dass diese lückenlos bedeckt ist.

2. Temperaturbegrenzer nach Anspruch 1, **dadurch gekennzeichnet, dass** die von der Oberseite (4) und von der Unterseite (5) her gegen die Vorderseite (3) des Körpers (11) gefaltete Abschnitte (10b) der Hülle (10) höchstens so lang sind wie die Höhe der Schmalseiten (6).

3. Temperaturbegrenzer nach einem der vorstehenden Ansprüche, **dadurch gekennzeichnet, dass** die von den Schmalseiten (6) her gegen die Vorderseite (3) gefaltete Abschnitte (10a) der Hülle (10) länger sind als die Höhe der Schmalseiten (6).

4. Temperaturbegrenzer nach einem der vorstehenden Ansprüche, **dadurch gekennzeichnet**, das zwischen den von den Schmalseiten (6) zur Vorderseite (3) gefalteten Abschnitten (10a) und den von der Ober- oder Unterseite (4, 5) zur Vorderseite (3) gefalteten Abschnitten (10b) jeweils eine Faltkante (10c) ausgebildet ist, die schräg zu einer Faltlinie (10d) verläuft, um welche die von der Ober- oder Unterseite (4, 5) zur Vorderseite (3) gefalteten Abschnitten (10b) gefaltet sind, wobei die Faltkante (10c) über die Faltlinie (10d) hinaus von der Stirnfläche (3) weg verläuft.

5. Temperaturbegrenzer nach einem der vorstehenden Ansprüche, **dadurch gekennzeichnet, dass** die von den Schmalseiten (6) her gegen die Vorderseite (3) gefalteten Abschnitte (10a) um Faltlinien (10e) gefaltet sind, die gegenüber Faltlinien (10d), um welche die von der Oberseite (4) und der Unterseite (5) her gegen die Vorderseite (3) gefalteten Abschnitte (10b) gefaltet sind, von der Vorderseite (3) weg zurückverlegt sind.

6. Temperaturbegrenzer nach einem der vorstehenden Ansprüche, **dadurch gekennzeichnet, dass** die von der Oberseite (4) und der Unterseite (5) her gegen die Vorderseite (3) gefalteten Abschnitte (10b) auf den von den Schmalseiten (6) her gegen die Vorderseite (3) gefalteten Abschnitten (10a) liegen.

7. Temperaturbegrenzer nach einem der vorstehenden Ansprüche, **dadurch gekennzeichnet, dass** der Körper (11) von den Schmalseiten (6) zu der Vorderseite (3) hin abgeschrägt oder gerundet ist.

8. Temperaturbegrenzer nach einem der vorstehenden Ansprüche, **dadurch gekennzeichnet, dass** die gegen die Vorderseite (3) gefalteten Abschnitte (10a, 10b) miteinander verschweißt sind.

9. Temperaturbegrenzer nach einem der vorstehenden Ansprüche, **dadurch gekennzeichnet, dass** die Hülle (10) aus einem Schrumpfschlauchabschnitt gebildet ist.

10. Temperaturbegrenzer nach einem der vorstehenden Ansprüche, **dadurch gekennzeichnet, dass** der Körper (11) ein metallisches Gehäuse ist.

11. Verfahren zum Herstellen einer an einem Ende geschlossenen Hülle (10) aus einem Schlauch und zum Aufbringen der Hülle (10) auf einen Temperaturbegrenzer, insbesondere Thermoschalter (1), durch
(a) Abschneiden eines Schlauchabschnitts (10) von einem Schlauch,
(b) Anordnen des Schlauchabschnitts (10) auf einem Dorn, der eine Vorderseite (3) und daran anschließend eine Oberseite (4) und eine Unterseite (5) sowie zwei Schmalseiten (6) aufweist, so dass ein Abschnitt des Schlauchabschnitts über die Vorderseite (3) vorsteht,
(c) Einwärtsfalten des über die Vorderseite (3) des Dorns vorstehenden Abschnittes des Schlauchabschnittes (10), und Verschließen des Schlauchabschnittes (10) durch stoffschlüssiges Verbinden des über die Vorderseite (3) des Dorns vorstehenden, einwärts gefalteten Abschnittes des Schlauchabschnittes (10) mit sich selbst, und
(d) Aufschieben der Hülle (10) auf den Temperaturbegrenzer (1),
**dadurch gekennzeichnet, dass** im Schritt (c) der über die Vorderseite (3) des Dorns überstehende Abschnitt des Schlauchabschnitts (10) sowohl von den Schmalseiten (6) her als auch von der Oberseite (4) und von der Unterseite (5) her gegen die Vorderseite (3) des Dorns gefaltet wird, so dass diese lückenlos bedeckt wird.

12. Verfahren nach Anspruch 11, **dadurch gekennzeichnet, dass** zuerst von den Schmalseiten (6) her und dann von der Oberseite (4) und von der Unterseite (5) her gegen die Vorderseite (3) des Dorns gefaltet wird.

13. Verfahren nach einem der Ansprüche 11 bis 12, **dadurch gekennzeichnet, dass** im Schritt (c) der über die Vorderseite (3) des Dorns überstehende Abschnitt des Schlauchabschnitts (10) von den Schmalseiten (6) her um eine Länge, welche größer ist als die Höhe der Schmalseiten (6), gefaltet wird.

14. Verfahren nach einem der Ansprüche 11 bis 13, **gekennzeichnet durch** die Verwendung eines Doms, welcher zwischen seiner stumpfen Vorderseite (3) und seinen beiden Schmalseiten (6) jeweils eine Schrägfläche oder eine gerundete Fläche aufweist.

15. Verfahren nach einem der Ansprüche 12 bis 14, **dadurch gekennzeichnet, dass** die von den Schmalseiten (6) her gegen die Vorderseite (3) um Faltlinien gefaltet (10e) wird, die gegenüber Faltlinien (10d), um welche von der Oberseite (4) und der Unterseite (5) her gegen die Vorderseite (3) gefaltet wird, von der Vorderseite (3) weg zurückverlegt sind

## Claims

1. A temperature limiter, in particular a thermal circuit breaker, comprising a front side (3) at which a top side (4), a bottom side (5) and two narrow sides (6) are attached, wherein the temperature limiter (1) has a body (11) which is enclosed by an electrically insulating sleeve (10) formed by a tube section which is folded and closed in a bonded manner at one end, wherein the closed end of the tube section covers a front side (3) of the body (11), **characterized in that** the sleeve (10) is folded on the narrow sides (6) by way of sections (10a), on the top side (4) and on the bottom side (5) by way of sections (10b) toward the front side (3) of the body (11) in such a way that the front side is covered without gaps.

2. The temperature limiter according to claim 1, **characterized in that** the sections (10b) of the sleeve (10) folded on the top side (4) and on the bottom side (5) toward the front side (3) of the body (11) are as long, at the most, as the height of the narrow sides (6).

3. The temperature limiter according to one of the preceding claims, **characterized in that** the sections (10a) of the sleeve (10) folded on the narrow sides (6) toward the front side (3) are longer than the height of the narrow sides (6).

4. The temperature limiter according to one of the preceding claims, **characterized in that** a folded edge (10c) is formed between the sections (10a) folded from the narrow sides (6) toward the front side (3) and between the sections (10b) folded from the top side or the bottom side (4, 5) toward the front side, each of which extends diagonally with respect to a fold line (10d) along which the sections (10b) folded from the top side or the bottom side (4, 5) toward the front side (3) are folded, wherein the folded edge (10c) extends away from the end face (3) beyond the fold line (10d).

5. The temperature limiter according to one of the preceding claims, **characterized in that** the sections (10a) folded from the narrow sides (6) toward the front side (3) are folded about fold lines (10e) which are set back from the front side (3) relative to fold lines (10d) along which the sections (10b) folded from the top side (4) and the bottom side (5) toward the front side (3) are folded.

6. The temperature limiter according to one of the preceding claims, **characterized in that** the sections (10b) folded from the top side (4) and the bottom side (5) toward the front side (3) lie on the sections (10a) folded from the narrow sides (6) toward the front side (3) .

7. The temperature limiter according to one of the preceding claims, **characterized in that** the body (11) is slanted or rounded from the narrow sides (6) toward the front side (3).

8. The temperature limiter according to one of the preceding claims, **characterized in that** the sections (10a, 10b) folded toward the front side (3) are welded to one another.

9. The temperature limiter according to one of the preceding claims, **characterized in that** the sleeve (10) is made of a shrinkable tube section.

10. The temperature limiter according to one of the preceding claims, **characterized in that** the body (11) is a metallic housing.

11. A method for producing a sleeve (10), which is closed at one end, out of a tube and for installing the sleeve (10) onto a temperature limiter, in particular a thermal circuit breaker (1), by
(a) cutting a tube section (10) off of a tube,
(b) placing the tube section (10) on a mandrel which comprises a front side (3) and, connected thereto, a top side (4) and a bottom side (5), and two narrow sides, so that a section of the tube section extends beyond the front side (3),
(c) inwardly folding the section of the tube section (10) extending beyond the front side (3) of the mandrel and closing the tube section (10) by bonding the inwardly folded section of the tube section (10), which extends beyond the front side (3) of the mandrel, to itself, and
(d) sliding the sleeve (10) onto the temperature limiter (1),
**characterized in that**, in step (c), the section of the tube section (10) extending beyond the front side (3) of the mandrel is folded from the narrow sides (6) and from the top side (4) and from the bottom side (5) toward the front side (3) of the mandrel, thereby covering the front side without gaps.

12. The method according to claim 11, **characterized in that** folding starts at the narrow sides (6), followed by the top side (4) and then the bottom side (5) toward the front side (3) of the mandrel.

13. The method according to one of the claims 11 to 12, **characterized in that**, in step (c), the section of the tube section (10) extending beyond the front side (3) of the mandrel is folded on the narrow sides (6) along a length that is greater than the height of the narrow sides (6).

14. The method according to one of the claims 11 to 13, **characterized by** the use of a mandrel which has a slanted surface or a rounded surface between the blunt front side (3) thereof and the two narrow sides (6) thereof.

15. The method according to one of the claims 12 to 14, **characterized in that** folding is carried out from the narrow sides (6) toward the front side (3) along fold lines (10e) which are set back from the front side (3) relative to fold lines (10d) along which folding is carried out from the top side (4) and the bottom side (5) toward the front side (3).

## Revendications

1. Limiteur de température, en particulier un interrupteur thermique, avec un côté avant (3) auquel sont reliés un côté supérieur (4) et un côté inférieur (5) ainsi que deux côtés étroits (6), le limiteur de température (1) comportant un corps (11) entouré par une enveloppe (10) électriquement isolante, constituée d'une section de tube replié à une extrémité et fermé par liaison de matière, l'extrémité fermée de la section de tube recouvrant un côté avant (3) du corps (11),
**caractérisé en ce que** l'enveloppe (10) est pliée de telle manière contre le côté avant (3) du corps (11), à partir des côtés étroits (6) avec des sections (10a) et à partir du côté supérieur (4) et du côté inférieur (5) avec des sections (10b), que celui-ci est recouvert entièrement.

2. Limiteur de température selon la revendication 1, **caractérisé en ce que** les sections (10b) de l'enveloppe (10) qui sont pliées contre le côté avant (3) du corps (11) à partir du côté supérieur (4) et du côté inférieur (5) présentent une longueur tout au plus égale à la hauteur des côtés étroits (6).

3. Limiteur de température selon l'une des revendications précédentes, **caractérisé en ce que** les sections (10a) de l'enveloppe (10) qui sont pliées contre le côté avant (3) à partir des côtés étroits (6) présentent une longueur supérieure à la hauteur des côtés étroits (6).

4. Limiteur de température selon l'une des revendications précédentes, **caractérisé en ce qu'**une arête de pliage (10c) est formée respectivement entre les sections (10a) pliées vers le côté avant (3) à partir des côtés étroits (6) et les sections (10b) pliées vers le côté avant (3) à partir du côté supérieur et du côté inférieur (4, 5), laquelle s'étend en biais par rapport à une ligne de pliage (10d), autour de laquelle sont pliées les sections (10b) pliées vers le côté avant (3) à partir du côté supérieur et du côté inférieur (4, 5), l'arête de pliage (10c) s'étendant au-delà de la ligne de pliage (10d) à partir de la surface frontale (3).

5. Limiteur de température selon l'une des revendications précédentes, **caractérisé en ce que** les sections (10a) pliées vers le côté avant (3) à partir des côtés étroits (6) sont pliées autour de lignes de pliage (10e) décalées vers l'arrière, à distance du côté avant (3), par rapport à des lignes de pliage (10d) autour desquelles sont pliées les sections (10b) pliées contre le côté avant (3) à partir du côté supérieur (4) et du côté inférieur (5).

6. Limiteur de température selon l'une des revendications précédentes, **caractérisé en ce que** les sections (10b) pliées contre le côté avant (3) à partir du côté supérieur (4) et du côté inférieur (5) s'appliquent sur les sections (10a) pliées contre le côté avant (3) à partir des côtés étroits (6).

7. Limiteur de température selon l'une des revendications précédentes, **caractérisé en ce que** le corps (11) est biseauté ou arrondi en partant des côtés étroits (6) vers le côté avant (3).

8. Limiteur de température selon l'une des revendications précédentes, **caractérisé en ce que** les sections (10a, 10b) pliées vers le côté avant (3) sont soudées l'une avec l'autre.

9. Limiteur de température selon l'une des revendications précédentes, **caractérisé en ce que** l'enveloppe (10) est constituée d'une section de tube rétrécissable.

10. Limiteur de température selon l'une des revendications précédentes, **caractérisé en ce que** le corps (11) est un boîtier métallique.

11. Procédé pour la fabrication d'une enveloppe (10) constituée d'un tube fermée à une extrémité, et pour l'application de l'enveloppe (10) sur un limiteur de température, en particulier le limiteur de température (1), par
(a) découpage d'une section de tube (10) à partir d'un tube,
(b) disposition de la section de tube (10) sur une épine comportant un côté avant (3) auquel sont reliés un côté supérieur (4) et un côté inférieur (5) ainsi que deux côtés étroits (6), de sorte qu'une section de la section de tube fait saillie sur le côté avant (3),
(c) pliage vers l'intérieur de la section de la section de tube (10) faisant saillie sur le côté avant (3) de l'épine, et fermeture de la section de tube (10) par assemblage de la section de la section de tube (10) faisant saillie sur le côté avant (3) de l'épine avec elle-même par liaison de matière, et
(d) montage de l'enveloppe (10) sur le limiteur de température (1),
**caractérisé en ce qu'**à l'étape (c), la section de la section de tube (10) faisant saillie sur le côté avant (3) de l'épine est plié aussi bien à partir des côtés étroits (6) qu'à partir du côté supérieur (4) et du côté inférieur (5) contre le côté avant (3) de l'épine, de sorte que celui-ci est entièrement recouvert.

12. Procédé selon la revendication 11, **caractérisé en ce que** le pliage contre le côté avant (3) de l'épine est effectué d'abord à partir des côtés étroits (6) puis à partir du côté supérieur (4) et du côté inférieur (5).

13. Procédé selon l'une des revendications 11 à 12, **caractérisé en ce qu'**à l'étape (c), la section de la section de tube (10) faisant saillie sur le côté avant (3) de l'épine est pliée à partir des côtés étroits (6) sur une longueur supérieure à la hauteur des côtés étroits (6).

14. Procédé selon l'une des revendications 11 à 13, **caractérisé par** l'utilisation d'une épine comportant respectivement une surface biseautée ou une surface arrondie entre son côté avant (3) tronqué et ses deux côtés étroits (6).

15. Procédé selon l'une des revendications 12 à 14, **caractérisé en ce que** les sections pliées contre le côté avant (3) à partir des côtés étroits (6) sont pliées autour de lignes de pliage (10e) décalées vers l'arrière, à distance du côté avant (3), par rapport à des lignes de pliage (10d) autour desquelles des sections sont pliées contre le côté avant (3) à partir du côté supérieur (4) et du côté inférieur (5).
